Europäisches Patentamt

**European Patent Office**

**Office européen des brevets**

(19)

(11) Numéro de publication: **0 348 253**

**B1**

(12) **FASCICULE DE BREVET EUROPEEN**

(45) Date de publication du fascicule du brevet: **09.01.91**

(51) Int. Cl.⁵: **B 60 K 5/04**

(21) Numéro de dépôt: **89401420.8**

(22) Date de dépôt: **24.05.89**

(54) Structure avant de véhicule automobile à moteur transversal.

(30) Priorité: **22.06.88 FR 8808393**

(43) Date de publication de la demande:
**27.12.89 Bulletin 89/52**

(45) Mention de la délivrance du brevet:
**09.01.91 Bulletin 91/02**

(84) Etats contractants désignés:
**DE GB IT**

(56) Documents cités:
**DE-A-3 345 171**
**GB-A-2 151 193**

(73) Titulaire: **AUTOMOBILES PEUGEOT**
**75, avenue de la Grande Armée**
**F-75116 Paris (FR)**
(73) Titulaire: **AUTOMOBILES CITROEN**
**62 Boulevard Victor-Hugo**
**F-92200 Neuilly-sur-Seine (FR)**

(72) Inventeur: **Froumajou, Armand**
**11 bis, rue Dr. Läennec**
**F-95520 Osny (FR)**
Inventeur: **Clément, Daniel**
**4, allée du Cèdre**
**F-78170 La Celle St Cloud (FR)**

(74) Mandataire: **Kohn, Philippe et al**
**c/o CABINET LAVOIX 2, place d'Estienne**
**d'Orves**
**F-75441 Paris Cédex 09 (FR)**

## Description

La présente invention a pour objet une structure avant de véhicule automobile du type comportant au moins deux longerons supérieurs s'étendant longitudinalement, depuis l'habitacle du véhicule, de part et d'autre du compartiment moteur et sur lesquels est monté transversalement un groupe motopropulseur du type comprenant un moteur et une boîte de vitesse fixée en bout du moteur.

Les structures avant de véhicules à moteur transversal sont de deux types principaux.

Selon une première conception, les longerons sont formés en bas des doublures d'ailes et s'étendent dans une zone relativement haute de la caisse pour passer au-dessus des organes de transmission aux roues avant. Cette conception nécessite de faire passer le longeron ente le moteur et le passage de roue, c'est-à-dire dans un espace très réduit compte tenu de l'encombrement transversal nécessaire pour permettre le braquage de la roue. Ceci a pour inconvénient de réduire notablement l'espace transversal disponible pour la mise en place du groupe motopropulseur.

Cet espace réduit est particulièrement gênant lors des opérations d'entretien et rend notamment très difficile l'accès à la partie d'extrémité du moteur comportant généralement les courroies de transmission.

Selon une seconde conception, la structure comporte deux longerons supérieurs passant à la partie supérieure de la caisse au-dessus de chacune des roues et redescendant chacun devant la roue correspondante vers l'avant du véhicule. Cette structure est habituellement complétée par un berceau inférieur de support du moteur qui est prévu pour être démontable.

Cette conception nécessite de prévoir un berceau de grandes dimensions peu favorable au confort acoustique des passagers cal il transmet de manière nuisible les nombreuses vibrations du groupe motopropulseur qu'il reçoit. On constate d'autre part que la partie avant du berceau est gênante dans la zone située en-dessous de la boîte de vitesses, en particulier lorsque cette dernière est une boîte automatique qui comporte généralement un important carter d'huile.

Le but de l'invention est de proposer une structure avant de véhicule automobile du type mentionné plus haut qui permette de libérer le maximum d'espace dans le compartiment moteur, soit pour augmenter les dimensions du groupe motopropulseur, soit pour améliorer l'accesibilité à ce dernier, qui soit de conception simple, léger, qui présente une bonne tenue aux chocs et qui permettre d'assurer un support correct du groupe motopropulseur avec le maximum d'efficacité, notamment quant à la filtration des vibrations.

Dans ce but l'invention propose une structure caractérisée en ce que le longeron situé du côté du moteur s'étend dans la partie haute de la caisse du véhicule au-dessus de la roue avant, en ce que le longeron supérieur situé du côté de la boîte de vitesses s'étend sensiblement à mi-hauteur de la caisse du véhicule au-dessus de l'extrémité de la boîte de vitesses, et en ce que la structure comporte également un berceau inférieur de support du groupe motopropulseur comprenant, du côté du moteur, un longeron inférieur long s'étendant jusqu'à l'extrémité avant de la caisse et, du côté de la boîte de vitesses, un longeron inférieur court s'étendant vers l'avant sensiblement jusqu'au droit de l'axe de l'essieu avant du véhicule.

Selon d'atures caractéristiques de l'invention:

— le longeron supérieur situé du côté du moteur s'étend depuis le pied avant de la caisse du véhicule jusqu'à l'extrémité avant de cette dernière;

— le longeron supérieur situé du côté du moteur s'étend vers l'avant du véhicule depuis une zone située sensiblement à la base de la baie de pare-brise;

— le longeron supérieur situé du côté de la boîte de vitesses s'étend depuis le plancher de la caisse du véhicule jusqu'à l'extrémité avant de cette dernière;

— les extrémités avant de chacun des longerons supérieurs sont reliées entre elles par un élément transversal de renfort;

— les extrémités arrière de chacun des longerons inférieurs du berceau sont reliées à la structure du véhicule sensiblement au droit du bord avant du plancher de la caisse du véhicule;

— l'extrémité avant du longeron inférieur du berceau du côté moteur est reliée audit élément transversal de renfort;

— le berceau comporte également une traverse de renfort située en arrière de l'essieu avant et à laquelle sont reliés les longerons inférieurs;

— les longerons inférieurs sont fixés à la face inférieure de la traverse, et les extrémités de cette dernière sont reliées, du côté du moteur, à une pièce de renfort de la doublure de la caisse du véhicule et, du côté de la boîte de vitesses, au longeron supérieur;

— la pièce de renfort est un bras qui s'étend depuis le plancher de la caisse du véhicule vers l'avant sensiblement jusqu'au droit de l'essieu avant du véhicule;

— le longeron supérieur situé du côté du moteur longe le support d'élément porteur de suspension de la roue avant en passant à l'extérieur de celui-ci par rapport à l'axe médian du véhicule;

— le bras de renfort s'étend sensiblement dans un plan vertical tangent à l'intérieur du support d'élément porteur;

— le groupe motopropulseur est relié au longeron supérieur situé du côté du moteur au moyen d'une patte de support dont l'extrémité est reliée à une cale d'amortissement elle-même fixée dans un boîtier comportant une bride extérieure supérieure qui en permet le montage et la fixation depuis la face inférieure du véhicule; et

— le groupe motopropulseur est monté transversalement en porte-à faux à l'avant de l'axe de l'essieu du véhicule.

D'autres caractéristiques et avantages de l'invention apparaîtront à la lecture de la description détaillée qui la suivre pour la compréhension de laquelle on se reportera aux dessins annexés dans lesquels:

—la figure 1 est une vue de dessus d'un exemple de réalisation d'une structure avant de véhicule automobile conformément aux enseignements de l'invention;

—la figure 2 est une vue en coupe longitudinale partielle par l'axe médian X—X du véhicule de la figure 1 représentant la structure du côté de la boîte de vitesses;

—la figure 3 est une vue similaire à celle de la figure 2 représentant la structure du côté du moteur;

—la figure 4 est une vue en coupe transversale sensiblement selon la ligne 4—4 de la figure 1;

—la figure 5 est une vue de dessus illustrant le groupe motopropulseur et certains éléments constitutifs de son berceau inférieur;

—la figure 6 est une vue en coupe transversale similaire à celle de la figure 4 qui représente, à échelle agrandie, un détail de celle-ci illustrant le mode de réalisation du support moteur; et

—la figure 7 est une vue en perspective du support moteur de la figure 6.

On reconnaît sur les figures la partie avant 10 de la structure d'un véhicule automobile du type à caisse monocoque.

La caisse comporte un habitacle 12 pour les passages du véhicule qui se prolonge vers l'avant de manière à définir un compartiment moteur 14 dans lequel un groupe motopropulseur 16 est monté transversalement, c'est-à-dire selon une direction perpendiculaire à l'axe médian X—X du véhicule.

Le groupe motopropulseur 16 est constitué d'un moteur 18 et d'une boîte de vitesses 20 montée en bout du moteur.

Le groupe motopropulseur 18 transmet son couple à deux roues avant gauche et droite, 24 et 26 respectivement. On a représenté en traits mixtes 28 et 30 les encombrements hors tout nécessaires pour permettre le braquage des roues 24 et 26 respectivement.

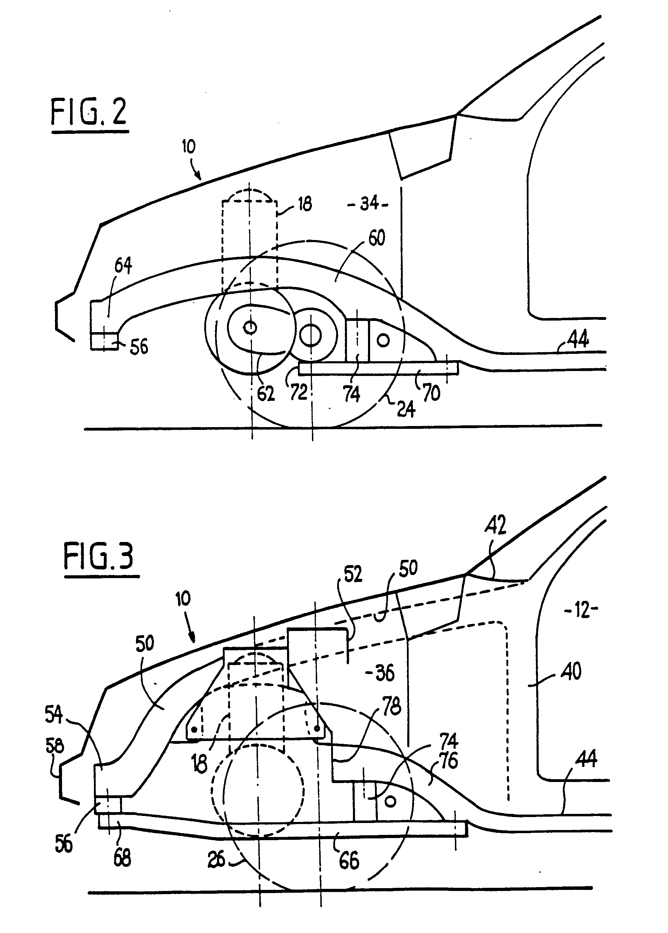

L'entraînement des roues 24 et 26 se fait par des organes de transmission représentés de manière schématique aux figures 2, 3 et 5 et qui sont désignés par la référence générale 32. Ces organes de transmission comportent pour l'essentiel deux arbres de transmission s'étendant depuis le différentiel de la boîte de vitesses 20 parallélement à l'axe Y—Y de l'essieu avant du véhicule.

D'une manière classique, le compartiment moteur est délimité latéralement de part et d'autre par des portions de tôles appelées doublures d'ailes 34 et 36. Ces éléments de structure s'étendent respectivement vers l'avant depuis deux pieds latéraux avant de l'habitacle, 38 et 40 respectivement, qui s'étendent verticalement vers le bas depuis le bord inférieur 42 de la baie de pare-brise jusqu'au plancher 44 du véhicule.

Conformément aux enseignements de l'invention, le groupe motopropulseur 16 est monté dans la structure avant par deux supports moteur supérieurs 46 et 48.

Le support moteur 48 est fixé par une de ses extrémités au moteur 18 et son extrémité libre est relié à un premier longeron supérieur 50, situé du côté du moteur, qui s'étend dans la partie haute de la caisse du véhicule au-dessus de la roue avant 26.

Ce premier longeron supérieur 50 s'étend à partir du pied avant 40 jusqu'à l'extrémité avant du véhicule.

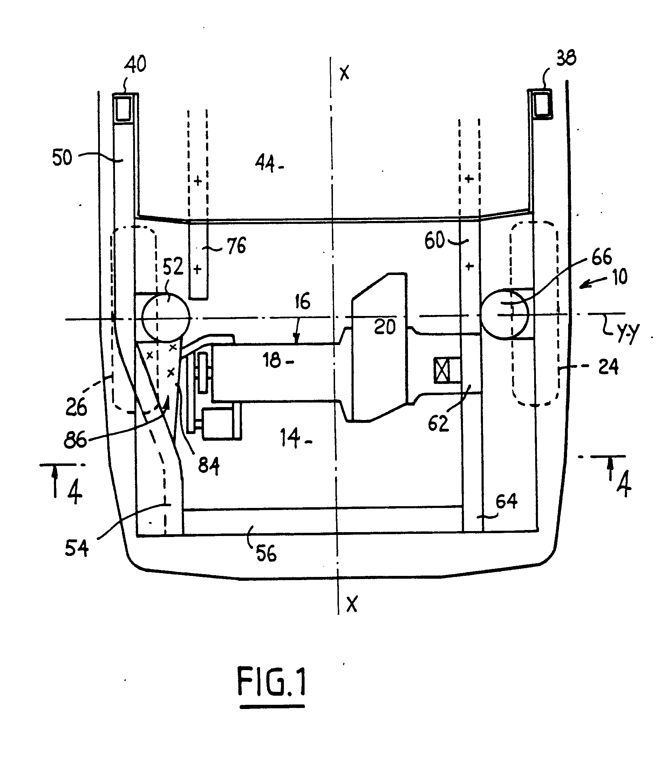

Comme on peut le constater à la figure 1, le longeron 50, en partant du pied avant 40, longe la coupelle formant élément support de suspension 52 en passant à l'extérieur de cette dernière par rapport à l'axe médian X—X, puis débouche à l'intérieur du compartiment 14 pour se rapprocher progressivement de l'axe médian X—X au voisinage de son extrémité avant 54.

L'extrémité avant 54 du premier longeron supérieur 50 est reliée à la face supérieure d'une poutre transversale de renfort 56 agencée au voisinage du pare-choc 58 du véhicule.

Le second support supérieur 46 du groupe motopropulseur relie la boîte de vitesses 20 à un second longeron supérieur 60.

Ce second longeron supérieur 60, situé du côté de la boîte de vitesses, s'étend depuis la face inférieure du plancher 44, vers l'avant du véhicule, en passant sensiblement à mi-hauteur de la caisse et au-dessus de l'extrémité libre 62 de la boîte de vitesses 20.

Comme on peut le constater à la figure 1, le second longeron supérieur 60 s'étend de manière rectiligne ou sensiblement rectiligne dans un plan vertical parallèle à l'axe médian X—X et son extrémité avant 64 est également reliée à la face supérieure de la poutre transversale de renfort 56.

Le plan dans lequel s'étend le second longeron supérieur 60 est tangent à l'intérieur de la coupelle support d'élément de suspension 65.

Conformément à l'invention la structure avant du véhicule comporte également un berceau inférieur.

Du côté du moteur, le berceau comprend un premier longeron inférieur long 66 qui s'étend sensiblement depuis le bord libre du plancher 44 du véhicule, en passant en-dessous des éléments de transmission 32, jusqu'à l'extrémité avant de la caisse du véhicule de façon à ce que son extrémité avant 68 soit reliée à la face inférieure de la poutre transversale de renfort 56.

Du côte de la boîte de vitesses, le berceau comprend également un second longeron inférieur 70 qui s'étend également depuis le bord libre du plancher 44 vers l'avant du véhicule, mais dont l'extrémité libre avant 72 se termine dans une zone située sensiblement au droit de l'axe Y—Y de l'essieu.

Le berceau comporte également une traverse de renfort 74 située en arrière de l'axe Y—Y et sur la face inférieure de laquelle sont fixés les longerons inférieurs 66 et 70 comme on peut le voir aux figures 2 et 3.

Du côté de la boîte de vitesses, la face supérieure de l'extrémité de la traverse 74 est fixée à la face inférieure en vis-à-vis du longeron supérieur 60.

Du côté du moteur, la structure avant comporte une pièce de renfort constituée sous la forme d'un bras court de renfort 76 qui s'étend, d'une manière symétrique à la première partie du longeron supérieur 60, par rapport à l'axe médian X—X, mais qui est interrompue de façon à ce que son extrémité libre 77 se situe légèrement en retrait de l'axe Y—Y de l'essieu avant.

Le berceau que l'on vient de décrire assure une géométrie correcte du train avant du véhicule en servant de point de fixation aux triangles inférieurs de suspension gauche et droit (non représentés) qui sont accrochés sur les longerons inférieurs 70 et 66. La crémaillère de direction 80 peut également être fixée sur la traverse 74 du berceau.

On décrira maintenant en détail un mode de réalisation du support supérieur 48 du moteur dont le rôle est d'une part d'assurer la suspension du moteur et, d'autre part, de transmettre les efforts dûs au couple de traction, ce dernier se traduisant dans le cas d'un moteur transversal par un effort longitudinal transmis à la structure.

Selon l'invention la cale moteur 82 à laquelle est reliée la patte de support moteur 48 est implantée en avant de la coupelle de suspension 52.

Dans la vue de dessus de la figure 1, la cale moteur est implantée dans une zone sensiblement triangulaire délimitée par le longeron 50, la coupelle 52 et par le plan interne 84 qui prolonge le bras de renfort 78.

Cette zone d'implantation est particulièrement avantageuse car elle est, de par sa conception, très rigide.

La zone triangulaire d'implantation 86 est fermée par une tôle horizontale 88.

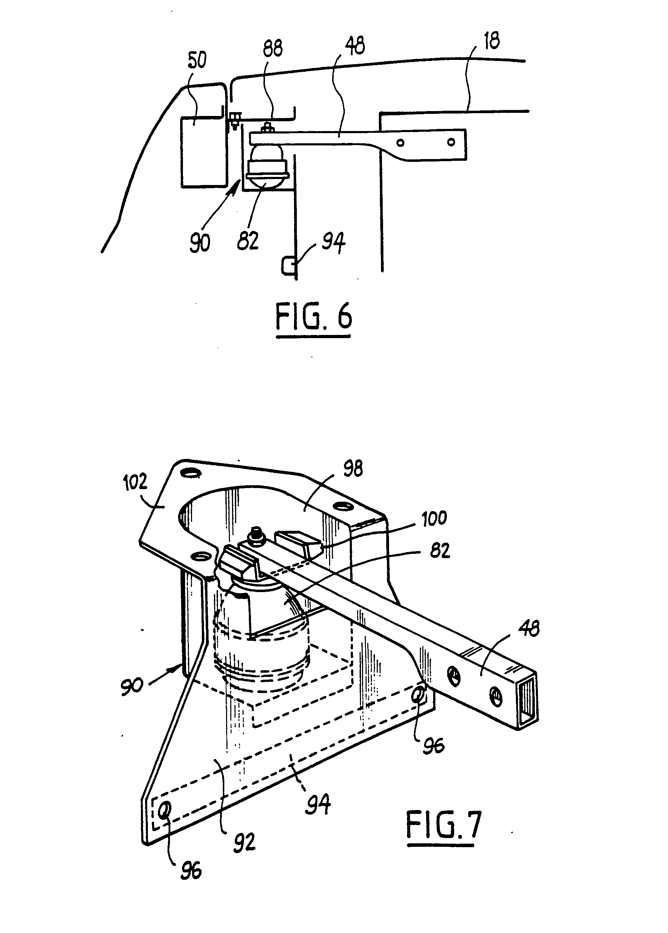

Comme on peut le constater à la figure 7, la cale 82 est reçue dans un boîtier en tôle 90. La cale est fixée par un axe vertical à la partie inférieure de la portion sensiblement cylindrique du boîtier 90, dans le fond de ce dernier. Le boîtier 90 se prolonge par sa partie inférieure par une paroi en tôle 92 raidie par un pli ou une nervure 94 et comprenant deux points de fixation 96.

Les faces interne en vis-à-vis 98 du boîtier 90 permettent de réaliser un appui correct des éléments limiteurs de couple 100 fixés de part et d'autre du support 48.

La partie supérieure du boîtier 90 comporte une bride supérieure plane 102 qui permet de réaliser la fixation de la cale moteur 82 sur la tôle horizontale 88 depuis la face inférieure de cette dernière, c'est-à-dire depuis la face inférieure du véhicule.

La structure du boîtier 90 recevant la cale 82 permet d'accroître la rigidité du côté de caisse concerné sacs présenter d'obstacle lors de l'opération d'assemblage du véhicule.

La fixation et la suspension du groupe motopropulseur peut être complétée, d'une manière connue, par une biellette de réaction (non représentée) qui est située à la partie basse et qui peut être reliée au berceau.

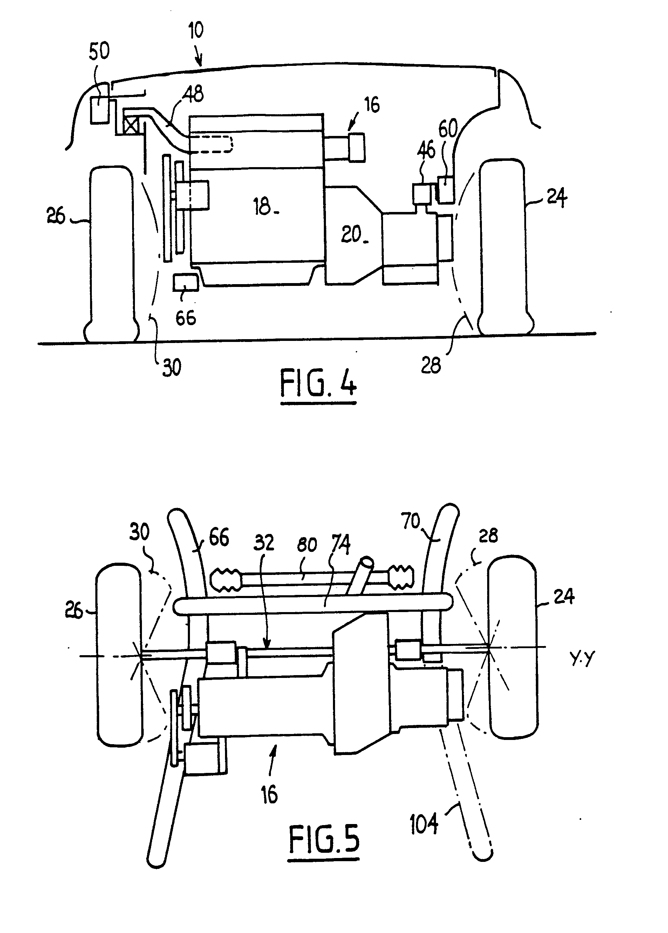

Enfin, sans sortie du cadre de la présente invention, il est possible de prévoir qu'un prolongement 104 du longeron inférieur court 70 soit rapporté, par exemple par boulonnage, soit monobloc avec ledit longeron, tel que représenté en traits mixtes à la figure 5.

**Revendications**

1. Structure avant (10) de véhicule automobile du type comportant au moins deux longerons supérieurs (50—60) s'étendant longitudinalement, depuis l'habitacle (12) du véhicule, de part et d'autre du compartiment moteur (14) et sur lesquels est monté transversalement un groupe motopropulseur (16) du type comprenant un moteur (18) et une boîte de vitesses (20) fixée en bout du moteur (18), caractérisée en ce que le longeron (50) situé du côté du moteur s'étend dans la partie haute de la caisse du véhicule au-dessus de la roue avant (26), en ce que le longeron supérieur (60) situé du côté de la boîte de vitesses (20) s'étend sensiblement à mi-hauteur de la caisse du véhicule au-dessus de l'extrémité (62) de la boîte de vitesses (20), et en ec que la structure comporte également un berceau inférieur de support du groupe motopropulseur (16) comprenant, du côté du moteur, un longeron inférieur long (66) s'étendant jusqu'à l'extrémité avant de la caisse et, du côté de la boîte de vitesses, un longeron inférieur court (70) s'étendant vers l'avant sensiblement jusqu'au droit de l'axe de l'essieu avant du véhicule.

2. Structure selon la revendication 1, caractérisée en ce que le longeron supérieur (50) situé du côté du moteur s'étend depuis le pied avant (40) de la caisse du véhicule jusqu'à l'extrémité avant de cette dernière.

3. Structure selon la revendication 2, caractérisée en ce que le longeron supérieur (50) situé du côté du moteur s'étend vers l'avant du véhicule depuis une zone située sensiblement à la base (42) de la baie de pare-brise.

4. Structure selon l'une quelconque des revendications précédentes, caractérisée en ce que le longeron supérieur (60) situé du côté de la boîte de vitesses s'étend depuis le plancher (44) de la caisse du véhicule jusqu'à l'extrémité avant de cette dernière.

5. Structure selon l'une quelconque des revendications précédentes, caractérisée en ce que les extrémités avant (54, 64) de chacun des longerons supérieurs (50, 60) sont reliées entre elles par un élément transversal de renfort (56).

6. Structure selon l'une quelconque des revendications précédentes caractérisée en ce que les extrémités arrière de chacun des longerons inférieurs (70, 66) du berceau sont reliées à la structure du véhicule sensiblement au droit du bord avant du plancher (44) de la caisse du véhicule.

7. Structure selon la revendication 6 prise en combinaison avec la revendication 5 caractérisée

en ce que l'extrémité avant (68) du longeron inférieur (66) du berceau du côté moteur est reliée audit élément transversal de renfort (56).

8. Structure selon l'une quelconque des revendications précédentes, caractérisée en ce que le berceau comporte également une traverse de renfort (74) située en arrière de l'essieu avant et à laquelle sont reliés les longerons inférieurs (66, 70).

9. Structure selon l'une des revendications 7 ou 8 caractérisée en ce que les longerons inférieurs (66, 70) sont fixés à la face inférieure de ladite traverse (74), et en ce que les extrémités de cette dernière sont reliées, du côte du moteur, à une pièce de renfort (76) de la doublure de la caisse du véhicule et, du côté de la boîte de vitesses, audit longeron supérieur (60).

10. Structure selon la revendication 9, caractérisée en ce que ladite pièce de renfort est un bras de renfort (76) qui s'étend depuis le plancher (44) de la caisse du véhicule vers l'avant sensiblement jusqu'au droit de l'essieu avant du véhicule.

11. Structure selon l'une quelconque des revendications précédentes, caractérisée en ce que le longeron supérieur (50) situé du côté du moteur longe le support d'élément porteur de suspension (52) de la roue avant (26) en passant à l'extérieur de celui-ci par rapport à l'axe médian (X—X) du véhicule.

12. Structure selon la revendication 11 prise en combinaison avec la revendication 10, caractérisée en ce que le bras de renfort (76) s'étend sensiblement dans un plan vertical tangent à l'intérieur du support d'élément porteur (52).

13. Structure selon l'une quelconque des revendications précédentes, caractérisée en ce que le groupe motopropulseur est relié au longeron supérieur situé du côté du moteur au moyen d'une patte de support (48) dont l'extrémité est reliée à une cale d'amortissement (82) elle-même fixée dans un boîtier (90) comportant une bride extérieure supérieure (102) qui en permet le montage et la fixation depuis la face inférieure du véhicule.

14. Structure selon l'une quelconque des revendications précédentes, caractérisée en ce que le groupe motopropulseur (16) est monté transversalement en porte-à-faux à l'avant de l'axe de l'essieu du véhicule.

**Patentansprüche**

1. Frontaufbau (10) eines Kraftfahrzeugs mit mindestens zwei oberen Holmen (50, 60), die sich von dem Karosseriegehäuse (12) des Fahrzeugs aus zu beiden Seiten des Motorraums (14) in Längsrichtung erstrecken und an denen ein Triebwerk (16) mit einem Motor (18) und einen am Stirnende des Motors (18) befestigten Getriebe (20) quer montiert ist, dadurch gekennzeichnet, daß der motorseitige Holm (50) sich im oberen Teil der Fahrzeugkarosserie über dem Vorderrad (26) erstreckt, daß der auf der Seite des Getriebes gelegene obere Holm (60) sich in etwa in halber Höhe der Fahrzeugkarosserie über dem Ende (62) des Getriebes (20) erstreckt und daß der Aufbau ferner einen unteren Träger für das Triebwerk (16) besitzt, der motorseitig aus einem unteren langen Holm (66), der sich bis zu dem vorderen Ende der Karosserie erstreckt, und getriebeseitig aus einem kurzen unteren Holm (70) besteht, der sich nach vorne in etwa bis in Höhe der Achse der Vorderradachse des Fahrzeugs erstreckt.

2. Aufbau nach Anspruch 1, dadurch gekennzeichnet, daß sich der motorseitige obere Holm (50) von der vorderen Säule (40) der Fahrzeugkarosserie bis zu deren vorderem Ende erstreckt.

3. Aufbau nach Anspruch 2, dadurch gekennzeichnet, daß sich der motorseitige obere Holm (50) von einer in etwa an der Basis (42) der Windschutzscheibenöffnung gelegenen Zone auf die Fahrzeugfront zu erstreckt.

4. Aufbau nach einem der vorhergehenden Ansprüche, dadurch gekennzeichnet, daß sich der getriebeseitige obere Holm (60) von dem Boden (44) der Fahrzeugkarosserie aus bis zu deren vorderem Ende erstreckt.

5. Aufbau nach einem der vorhergehenden Ansprüche, dadurch gekennzeichnet, daß die vorderen Enden (54, 64) jedes der oberen Holme (50, 60) durch ein Verstärkungsquerelement (56) miteinander verbunden sind.

6. Aufbau nach einem der vorhergehenden Ansprüche, dadurch gekennzeichnet, daß die hinteren Enden jedes der unteren Holme (70, 66) des Triebwerkträgers mit dem Aufbau des Fahrzeugs in etwa in Höhe des vorderen Randes des Bodens (44) der Fahrzeugkarosserie verbunden sind.

7. Aufbau nach Anspruch 6 in Kombination mit Anspruch 5, dadurch gekennzeichnet, daß das vordere Ende (68) des unteren motorseitigen Holms (66) des Triebwerkträgers mit dem Verstärkungsquerelement (56) verbunden ist.

8. Aufbau nach einem der vorhergehenden Ansprüche, dadurch gekennzeichnet, daß der Triebwerkträger ferner einen Verstärkungsquerträger (74) besitzt, der hinter der Vorderradachse angeordnet ist und mit dem die unteren Holme (66, 70) verbunden sind.

9. Aufbau nach einem der Ansprüche 7 oder 8, dadurch gekennzeichnet, daß die unteren Holme (66, 70) an der Unterseite des Querträgers (74) befestigt sind und daß die Enden des Querträgers motorseitig mit einem Verstärkungsteil (76) des Innenblechs der Fahrzeugkarosserie und getriebebeseitig mit dem oberen Holm (60) verbunden sind.

10. Aufbau nach Anspruch 9, dadurch gekennzeichnet, daß das Verstärkungsteil ein Verstärkungsarm (76) ist, der sich von dem Boden (44) der Fahrzeugkarosserie nach vorne in etwa bis in Höhe der Vorderradachse des Fahrzeugs erstreckt.

11. Aufbau nach einem der vorhergehenden Ansprüche, dadurch gekennzeichnet, daß der obere, motorseitige Holm (50) bezüglich der Mittelachse (X—X) des Fahrzeugs außen an dem Tragelementträger (52) der Federung des Vorderrades (26) vorbeiläuft.

12. Aufbau nach Anspruch 11 in Kombination mit Anspruch 10, dadurch gekennzeichnet, daß sich der Verstärkungsarm (76) in etwa in einer vertikalen Ebene erstreckt, die den Tragelementträger (52) auf der Innenseite tangiert.

13. Aufbau nach einem der vorhergehenden Ansprüche, dadurch gekennzeichnet, daß das Triebwerk mit dem oberen motorseitigen Holm über einen Tragarm (48) verbunden ist, dessen Ende mit einem Dämpfungselement (82) verbunden ist, das seinerseits in einem Gehäuse (90) mit einem oberen Außenflansch (102) befestigt ist, der die Montage und Befestigung von der Unterseite des Fahrzeugs aus gestattet.

14. Aufbau nach einem der vorhergehenden Ansprüche, dadurch gekennzeichnet, daß das Triebwerk (16) vor der Radachse des Fahrzeugs auskragend quer montiert ist.

**Claims**

1. Front structure (10) of a motor vehicle, of the type comprising at least two upper side members (50—60) which extend longitudinally from the passenger compartment (12) of the vehicle on either side of the engine compartment (14) and on which is mounted transversely an engine unit (60) of the type comprising an engine (18) and a gearbox (20) fastened to the end of the engine (18), characterized in that the side member (50) located on the same side as the engine extends in the upper part of the vehicle body above the front wheel (26), in that the upper side member (60) located on the same side as the gearbox (20) extends substantially at mid-height of the vehicle body above the end (62) of the gearbox (20) and in that the structure also possesses a lower supporting mount for the engine unit (16), comprising, on the same side as the engine, a long lower side member (66) extending as far as the front end of the body and, on the same side as the gearbox, a short lower side member (70) extending forwards substantially in line with the axis of the front axle of the vehicle.

2. Structure according to Claim 1, characterized in that the upper side member (50) located on the same side as the engine extends from the front leg (40) of the vehicle body as far as the front end of the latter.

3. Structure according to Claim 2, characterized in that the upper side member (50) located on the same side as the engine extends towards the front of the vehicle from a zone located substantially at the base (42) of the windscreen bay.

4. Structure according to any one of the preceding claims, characterized in that the upper side member (60) located on the same side as the gearbox extends from the floor (44) of the vehicle body as far as the front end of the latter.

5. Structure according to any one of the preceding claims, characterized in that the front ends (54, 64) of each of the upper side members (50, 60) are connected to one another by means of a transverse reinforcing element (56).

6. Structure according to any one of the preceding claims, characterized in that the rear ends of each of the lower side members (70, 66) of the mount are connected to the structure of the vehicle substantially in line with the front edge of the floor (44) of the vehicle body.

7. Structure according to Claim 6, taken in combination with Claim 5, characterized in that the front end (68) of the lower side member (66) of the mount on the same side as the engine is connected to the said transverse reinforcing element (56).

8. Structure according to any one of the preceding claims, characterized in that the mount also possesses a reinforcing crosspiece (74) which is located at the rear of the front axle and to which the lower side members (66, 70) are connected.

9. Structure according to one of Claims 7 or 8, characterized in that the lower side members (66, 70) are fastened to the lower face of the said crosspiece (74), and in that the ends of the latter are connected, on the same side as the engine, to a reinforcing piece (76) for the lining of the vehicle body and, on the same side as the gearbox, to the said upper side member (60).

10. Structure according to Claim 9, characterized in that the said reinforcing piece is a reinforcing arm (76) which extends forwards from the floor (44) of the vehicle body substantially in line with the front axle of the vehicle.

11. Structure according to any one of the preceding claims, characterized in that the upper side member (50) located on the same side as the engine extends along the suspension-carrying element support (52) of the front wheel (26), and at the same time passing outside the latter in relation to the centre axis (X—X) of the vehicle.

12. Structure according to Claim 11, taken in combination with Claim 10, characterized in that the reinforcing arm (76) extends substantially in a vertical plane tangential to the inside of the carrying element support (52).

13. Structure according to any one of the preceding claims, characterized in that the engine unit is connected to the upper side member located on the same side as the engine by means of a supporting bracket (48), the end of which is connected to a shock-absorbing bolster (82), itself fastened in a housing (90) having an upper outer flange (102) which allows it to be mounted and fastened from the lower face of the vehicle.

14. Structure according to any one of the preceding claims, characterized in that the engine unit (16) is mounted transversely, overhanging in front of the axis of the vehicle axle.

FIG.1

FIG.2

FIG.3

FIG. 4

FIG.5

FIG. 6

FIG. 7